# EUROPEAN PATENT APPLICATION

(11) **EP 4 725 690 A1**
(43) Date of publication of application: **15.04.2026**
(21) Application number: 25207994.2
(22) Date of filing: 10.10.2025
(51) Int. Cl.: B32B 1/08, C08K 3/04, D01F 1/09, F16L 9/12, F16L 11/127

(54) **BIO-BASED ANTISTATIC INNER LAYER FOR HOSE**

(30) Priority: 10.10.2024 IN 202411077007
(71) Applicant: Eaton Intelligent Power Limited, Dublin 4 (IE)
(72) Inventor: LaCasse, Randall Leo, Dublin 4, D04 Y0C2 (IE); Mohapatra, Chandan, Dublin 4, D04 Y0C2 (IE); Pawar, Shital, Dublin 4, D04 Y0C2 (IE); Sircar, Indraneel, Dublin 4, D04 Y0C2 (IE); Zekriardehani, Shahab, Dublin 4, D04 Y0C2 (IE)
(74) Representative: Jolliffe, Jack Louis

(57) **Abstract**

A bio-based electrically conductive polymer composite material is provided. The bio-based electrically conductive polymer composite material is useful as a bio-based anti-static inner layer in an aerospace hose.

## Description

### CROSS-REFERENCES TO RELATED APPLICATIONS

This application claims the benefit of priority to Indian Provisional Application No. 202411077007 filed October 10, 2024, the disclosure of which is incorporated by reference herein in its entirety.

### BACKGROUND

### TECHNICAL FIELD

A bio-based electrically conductive polymer composite material is provided. The bio-based electrically conductive polymer composite material is useful as a bio-based anti-static inner layer in an aerospace hose.

### DESCRIPTION OF THE RELATED ART

Current hoses used to carry aerospace fluids typically include a polytetrafluoroethylene (PTFE) inner tube and a braiding/connector package. The PTFE material used for the inner tube is under scrutiny by the United States Environmental Protection Agency (EPA) and European Chemicals Agency (ECHA). New regulations from the EPA regarding per- and polyfluoroalkyl substances (PFAS)-based materials will likely restrict the use of PTFE in many applications. Developing alternative materials to replace PTFE may be required. The PTFE tubes have a unique set of properties including chemical resistance to aero fluids, high thermal stability, and flexibility. Therefore, replacing PTFE for use in aerospace hoses is challenging.

US 2011/0201731 A1, Korzhenko et al., discloses a composite comprising a polymer and 10 to 50% by weight of carbon nanotubes.

US 2019/0062524 A1, Tomzynska et al., discloses a composite comprising a polymer and carbon nanotube sheetlets.

US 11,708,920 B2, Hachet et al., discloses an annulated tubular structure for transporting fuel into a fuel tank of a vehicle, comprising at least one layer comprising 39-100% by weight of an aliphatic polyamide, 0-4 % by weight plasticizer, 0-20% by weight of an impact modifier, and 0-37% by weight of an additive.

US 11,787,926 B2, Mapkar et al., discloses an electrically conductive polymer composite comprising a polymer, an extrudability component, and a filler component comprising a strengthening component and a conductive component.

US 2021/0221528 A1, Zhou et al., discloses a conductive nylon nanocomposite for a fuel conveyance system.

### SUMMARY

Conductive thermoplastic polymer composites are provided prepared from a composition comprising uniformly dispersed low concentration of high aspect ratio carbon nanotubes (CNTs) in a bio-based thermoplastic polymer with a dispersing and processing additive. The conductive polymer composite can be used as an antistatic inner tube layer for aerospace hoses. The conductive polymer composites exhibit high electrical conductivity, compatibility with aerospace fluids, thermal stability, flexibility, and compatibility with outer tube layer when co-extruded.

An electrically conductive polymer composite material is provided wherein the composite is prepared from a composition comprising a first bio-based polyamide, carbon nanotubes, and a dispersing and processing additive.

A hose is provided comprising at least one layer comprising a conductive thermoplastic polymer composite material prepared from a composition comprising a first bio-based polyamide, carbon nanotubes, and a dispersing and processing additive.

In some cases, the first bio-based polyamide is selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide.

In some cases, the first bio-based polyamide exhibits >50%, >60%, >70%, or >80% bio-based carbon content when tested under ASTM D6866.

In some cases, the carbon nanotubes are selected from the group consisting of single walled carbon nanotubes, multiwalled carbon nanotubes, and branched carbon nanotubes. In some cases, the carbon nanotubes are crosslinked and branched carbon nanotubes. In some cases, the carbon nanotubes have a high aspect ratio of >500, > 1,000, >1,500, >5,000, or >10,000.

In some cases, the dispersing and processing additive is a selected from the group consisting of polyhedral oligomeric silsesquioxanes (POSS), silanes, and silanol-POSS. In some cases, the dispersing and processing additive is selected from the group consisting of trisilanol phenyl POSS, trisilanol isobutyl POSS, and octaisobutyl POSS.

A conductive polymer composite material is provided, wherein the composite is prepared from a composition comprising 90-99.8 wt% of a first bio-based polyamide; 0.1-5.0 wt% of carbon nanotubes; and 0.1-5.0 wt% of a dispersing and processing additive. In some cases, the composition comprises 93-99.6 wt% of the first bio-based polyamide; 0.2-4.0 wt% of the carbon nanotubes; and 0.2-3.0 wt% of the dispersing and processing additive.

In some cases, the electrically conductive polymer composite material according exhibits one or more properties selected from the group consisting of: a tensile strength of >40 MPa, >45 MPa, or >50 MPa when tested under ASTM D638-22 or ISO 527-1/-2; a tensile modulus of>275 MPa, >300 MPa, >350 MPa, >400 MPa, >450 MPa, or > 500 MPa; a tensile elongation of >150%, >200%, >250%, >300%, or >350%; a flexural strength of> 20 MPa, >25 MPa, or >30 MPa; a flexural modulus of>550 MPa, >600 MPa, > 700 MPa, >800 MPa, >900 MPa, or >1,000 MPa; a surface resistivity at 100V of no more than 5 x 10^11 Ohms, no more than 5 x 10^10 Ohms, no more than 5 x 10^9 Ohms, no more than 5 x 10^8 Ohms, or no more than 1 x 10^8 Ohms under ASTM D257 or IEC 62631-3-1; and a volume resistivity at 100V of no more than 5 x 10^11 Ohms.mm, no more than 5 x 10^10 Ohms.mm, no more than 5 x 10^9 Ohms.mm, no more than 5 x 10^8 Ohms.mm, or no more than 1 x 10^8 Ohms.mm. In some cases, the values refer to conditioned samples. In some cases, the values refer to dry-as-molded samples.

A method of making a bio-based conductive polymer composite material is provided, the method comprising mixing the first bio-based polyamide, the carbon nanotubes, and the dispersing and processing additive to form a composition; and melt extruding the composition to form pellets of the bio-based polymer composite material. In some cases, the method further comprises melting the pellets of the bio-based polymer composite material; and extruding the melted composition through a die to form a shaped article. In some cases, the method comprises forming a tube as the shaped article.

In some cases, the mixing comprises a one step process wherein all ingredients are staged and added into the twin-screw extruder for compounding. In some cases, the mixing comprises a two step process wherein first the carbon, processing wax, POSS and 10% of the polymer in ground form is mixed in a high speed mixer to form a premix, and compounded into pellets. Second, the premix pellets and remaining polymer is blended and extruded into a final compound or directly extruded. In some cases, the process comprises first mixing POSS, with a Polyester wax, calcium saponified or silicone modified polyester wax, or Polyolefin wax. In some cases, the mixing comprises mixing carbon, processing wax and POSS with all of the polymer, ground into a powder, in a high speed mixer, followed by compounding through a twin screw extruder into a compounded pellet, which can further be extruded.

A method of making a multi-layered antistatic hose is provided, the method comprising melt co-extruding a tube comprising an inner tube layer and an outer tube layer, wherein the inner tube layer comprises the bio-based polymer composite material according to claim 1, and the outer tube layer is prepared from a composition comprising a second bio-based polyamide and optionally a dispersing and processing additive; and optionally braiding a reinforcing layer comprising a metallic braid over the inner tube layer. In some cases, the first and second bio-based polyamides are the same. In some cases, the outer tube layer does not include carbon nanotubes.

A multi-layered antistatic hose is provided comprising: i) an anti-static conductive polymer composite inner tube layer prepared from a composition comprising a first bio-based polyamide, carbon nanotubes, and a dispersing and processing additive; ii) an outer tube layer prepared from a composition comprising a second bio-based polyamide, and optionally a dispersing and processing additive; and optionally iii) one or more reinforcing layers comprising a metallic braid. In some cases, the electrical current of the anti-static conductive polymer composite inner tube layer is equal to or greater than 10 µA for hose sizes -03 to -08, and equal to or greater than 20 µA for hose sizes -10 and over when tested under SAE AS2078.

### BRIEF DESCRIPTION OF THE DRAWINGS

FIG. 1 shows a representative process of preparing a conductive polymer composite comprises mixing and using a twin screw extruder from a bio-based thermoplastic polymer, a CNT polymer, and processing aids.
FIG. 2 shows a representative process comprising melt co-extrusion of a bi-layered tube comprising a conductive inner tube layer comprising the conductive polymer composite and an outer tube layer comprising the bio-based thermoplastic polymer. A coextrusion process for the bi-layered tube comprises co-extruding the two different compositions and combining in the die.
FIG. 3 shows exemplary aerospace hose assemblies.
FIG. 4 shows two graphs with electrical properties Surface resistivity (Ohms@ 100V; left panel) and Volume resistivity (Ohms.mm @100V; right panel) for comparative base polymer (A) and inventive conductive polymer composites having 0.25 wt% CNTs (B), 0.5 wt% CNTs (C), 0.75 wt% CNTs (D), 1.0 wt% CNTs (E), 1.25 wt% CNTs (F), 1.50 wt% (G), 1.75 wt% CNTs (H), and 2.0 wt % CNTs (I). Surface and Volume resistivity decrease with compounding with increased CNT concentrations hence electrical conductivity increases. 10^8 ohm surface resistivity is observed at 2 wt% of CNT compounding.
FIG. 5 shows a graph of mechanical properties Tensile strength (MPa; 1) and Flexural strength (MPa; 2) for comparative base polymer (A) and inventive conductive polymer composites having 0.25 wt% CNTs (B), 0.5 wt% CNTs (C), 0.75 wt% CNTs (D), 1.0 wt% CNTs (E), 1.25 wt% CNTs (F), 1.50 wt% (G), 1.75 wt% CNTs (H), and 2.0 wt % CNTs (I). There is about a 10% change in mechanical properties with 2% CNT compared to base polymer.
FIG. 6 shows a graph of mechanical properties Tensile modulus (MPa; 1), Tensile elongation (%, 2) and Flexural modulus (MPa, 3) for comparative base polymer (A) and inventive conductive polymer composites having 0.25 wt% CNTs (B), 0.5 wt% CNTs (C), 0.75 wt% CNTs (D), 1.0 wt% CNTs (E), 1.25 wt% CNTs (F), 1.50 wt% (G), 1.75 wt% CNTs (H), and 2.0 wt % CNTs (I).
FIG. 7 shows a boxplot of ultimate tensile strength (UTS)(psi) of conductive layer study of four different DOE composite tubing samples comprising from 1.0 wt% to 2.5 wt% CNTs.
FIG. 8 shows a boxplot of tensile elongation (%) of conductive layer study of four different DOE composite tubing samples comprising from 1.0 wt% to 2.5 wt% CNTs.

### DETAILED DESCRIPTION OF THE INVENTION

Typical prior art aerospace hose tubes can comprise a PTFE tube as a double layer structure where inner layer is made of conducting PTFE composites. There is a need for material replacement to be complaint with EPA and ECHA regulations. The inner conducting layer is used to dissipate the electrical charge accumulated at the tube surface, acting as an anti-static layer. Therefore, a conducting composite has been developed using a bio-sourced thermoplastic polymer, that eliminates use of PFAS, is EPA compliant, carries a minimum carbon footprint, and a low concentration of a conducting filler. The low or ultra-low concentration of filler will provide desired electrical conductivity for antistatic properties without impeding flexibility of the base material and be compliant with new EPA regulations.

Conducting fillers such as carbon black, graphite, carbon fiber, graphene, CNTs, and stainless-steel fibers are used for developing conductive composites. However, the level of electrical conductivity in composites is highly dependent on physical properties of the filler, aspect ratio, conductivity, compatibility with polymer matrix and dispersion efficiency. In current aerospace hoses, PTFE filled with carbon black is used to achieve desired electrical conductivity.

Electrical conductivity is achieved by creating an interconnected network of conductive fillers in polymer matrix. Therefore, using a higher aspect ratio filler can provide interconnected network at lesser filler concentration compared to short and low aspect ratio fillers. Carbon black particles are spherical and have aspect ratio of one. Therefore, a relatively high concentration of CB is required to create conductive interconnected network in the polymer matrix to achieve desired electrical conductivity. This higher concertation of CB can impact the flexibility of the material. Moreover, conductive filler carries a relatively price in polymer compounds, so a higher concentration of filler in final composition significantly increases the material cost. To address these issues, high aspect ratio carbon nanotubes are employed herein as an electrically conducting filler. With the help of optimized processing parameters, desired electrical conductivity can be achieved at low or ultralow concertation of CNTs keeping material flexibility intact.

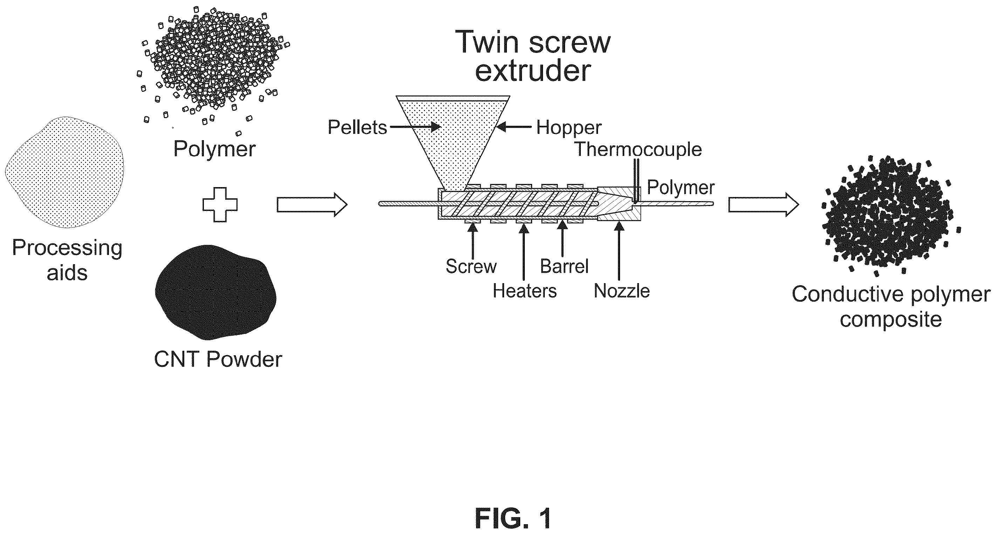

FIG. 1 shows a representative conductive polymer composite development process. The newly developed conductive polymer composite is PFAS compliant and carries less carbon footprint making it sustainable solution.

### Definitions

The singular forms "a", "an" and "the" are intended to include the plural forms as well, unless the context clearly indicates otherwise.

The term "and/or" refers to and encompasses any and all possible combinations of one or more of the associated listed items.

The term "about," when referring to a measurable value such as an amount of a compound, dose, time, temperature, and the like, is meant to encompass variations of +/-10%, 5%, 1%, 0.5%, or even 0.1% of the specified amount.

The term "antistatic hose" refers to a hose having an electrically conductive inner layer that exhibits a surface resistivity at 100V of no more than 5 x 10^8 Ohms under ASTM D257. An "antistatic fuel hose" refers to an antistatic hose comprising an inner layer compatible with an aviation fuel such as a petroleum-based fuel, and petroleum and synthetic fuel blends. In some cases, the antistatic hose comprises an inner layer compatible with an aviation fuel. In some cases, the aviation fuel is selected from the group consisting of Jet A, Jet A1, Jet B, JP4, JP5, JP7, JP8, TS-1, Avgas 100, Avgas 100LL, Avgas UL91, Avgas UL94, No 1 jet fuel, No 2 jet fuel, No 3 jet fuel, and the like. In some cases, the antistatic hose is compatible with an aerospace fluid selected from the group consisting of aviation fuels, hydraulic fluids, coolants, and deicing fluids.

The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms, including technical and scientific terms used in the description, have the same meaning as commonly understood by one of ordinary skill in the art to which this disclosure belongs. In the event of conflicting terminology, the present specification is controlling.

All patents, patent applications and publications referred to herein are incorporated by reference in their entirety.

The embodiments described in one aspect of the present disclosure are not limited to the aspect described. The embodiments may also be applied to a different aspect of the disclosure as long as the embodiments do not prevent these aspects of the disclosure from operating for its intended purpose.

Polymer based electrically conductive composites have been developed for various applications. Owing to its heterogeneous nature, polymer-based composite development for application requires an understanding of application and composite material properties. The final properties are dependent on the composite's components (i.e., polymer matrix and conductive filler) and processing methodology.

Conducting fillers such as carbon black, carbon fiber, graphene, CNTs, and stainless-steel fibers are used for developing conductive composites. However, level of electrical conductivity in composites is highly dependent on physical properties of the filler, aspect ratio, conductivity, compatibility with polymer matrix and dispersion efficiency. Currently, in aerospace hoses, PTFE filled with carbon black is used to achieve desired electrical conductivity. Electrical conductivity is achieved by creating interconnected network of conductive fillers in polymer matrix. Therefore, higher aspect ratio filler can provide interconnected network at lesser concentration compared to short and low aspect ratio fillers. Carbon black particles are spherical and have aspect ratio of one. Therefore, high concentration of CB is required to create conductive interconnected network in the polymer matrix hence, to achieve desired electrical conductivity. This higher concertation of CB impacts flexibility of the material. Moreover, conductive filler carries highest price in polymer compound, and higher concentration of filler in final composition significantly increases the material cost. To address these issues, high aspect ratio carbon nanotubes are employed as a conducting filler. The desired electrical conductivity can be achieved at low concentrations of CNTs keeping material flexibility intact. Table 1 shows conductive polymer composite formulation details. FIG. 1 shows an exemplary conductive polymer composite development process. The newly developed conductive polymer composite was developed to be PFAS complaint and carries a lower carbon footprint than prior art hoses making it a sustainable solution.

### Compositions

An electrically conductive polymer composite composition is provided prepared from a composition comprising a bio-based thermoplastic polymer, high aspect ratio carbon nanotubes (CNTs), and a dispersing and processing additive. One or more additional additives may optionally be included. In some cases, the conductive polymer composite is prepared from a composition according to Table 1.

**Table 1. Conductive Polymer Composite Compositions**

| Function | Composition (wt%) | | |
|---|---|---|---|
| | Formula A | Formula B | Formula C |
| bio-based thermoplastic polymer | 90-99.8 | 93-99.6 | 95-99.5 |
| high aspect ratio CNTs | 0.1-5.0 | 0.2-4.0 | 0.25-3.0 |
| dispersing and processing additive | 0.1-5.0 | 0.2-3.0 | 0.25-2.0 |

### Bio-based thermoplastic polymers

The conductive polymer composite is prepared from a composition comprising a bio-based thermoplastic polymer. The feedstock for bio-based thermoplastic polymers can come from agricultural raw materials, such as castor oil in the case of PA11. Biobased can also refer to processes where biomaterials are gasified to create precursors, such as CO and H₂, as well as CO₂, CH₄, and N₂, known as syngas. These can further on in the process by combined catalytically to produce hydrocarbons.

In some cases, the bio-based thermoplastic polymer comprises a bio-based carbon content of 50% or more, 60% or more, 70% or more, 75% or more, 80% or more, or 85% or more according to ASTM D6866. In some cased, the bio-based thermoplastic polymer has a bio-based carbon content in a range of 50 to 100%, 60 to 100%, 70 to 100%, 75 to 100%, or 80 to 100% when measured according to ASTM D6866. ASTM D6866 standard test method for determining the bio-based content of solid, liquid, and gaseous samples using radiocarbon analysis. In some cases, ASTM6866-22 test version is employed.

Bio-based thermoplastic polymers are known in the art. The bio-based thermoplastic polymer is prepared with precursors from renewable sources. In some cases, the bio-based thermoplastic polymer may be a bio-based polyamide (PA), bio-based polyphthalamide (PPA), bio-based polyphenylene sulfide (PPS), bio-based polyphenylsulfone (PPSU), bio-based polyetherimide (PEI), bio-based polyamide-imide (PAI), bio-based polyaryletherketone (PAEK), bio-based polyetherketone (PEK), bio-based polyetherketoneketone (PEKK), and bio-based polyetheretherketone (PEEK). In some cases, the bio-based thermoplastic polymer contains a blend of two or more bio-based thermoplastic polymers. In some cases, a single bio-based thermoplastic polymer is employed.

In some cases, the bio-based thermoplastic polymer may be blended with a fluorinated thermoplastic polymer, e.g., PTFE, ethylene tetrafluoroethylene (ETFE), or fluorinated ethylene propylene (FEP). In some cases, no fluorinated thermoplastic polymer is employed.

In some cases, the bio-based thermoplastic polymer is a bio-based polyamide. Any appropriate bio-based polyamide may be employed.

Bio-based polyamides are disclosed, for example, in Sharma et al., 2023, Iranian Polymer Journal, 32:773-790. Bio-based polyamides are produced primarily or fully from renewable sources. The bio-based polyamide can be selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide. In some cases, the bio-based polyamide can be a single bio-based polyamide.

In some cases, a bio-based semicrystalline polymer may be employed. These may include aliphatic polyamides such as polyamide 11 (PA11), PA6, PA66, PA56, and semi aromatic polyamides such as polyphthalamide (PPA).

Bio-based polyamides are commercially available. For example, ECOPAXX^{®} from Envalior is a bio-based polyamide. ECOPAXX^{®} PA 410 contains 72% bio-based carbon content derived from castor plants. VESTAMID^{®} Terra from Evonik includes PA 610 and PA 1010 grades. The PA 610 grade has a 62% bio-renewable content. RILSAN^{®} polyamide 11 from ARKEMA is made from 100% renewable castor oil. RILSAN^{®} PA11 has 89% bio-based carbon content under ASTM D6866. Bio-based PPA is available as AMODEL^{®} Bios from SYENSQO.

In some cases, the bio-based polyamide falls under the PA11-PHLY category under DIN 73378. In some cases, the bio-based polyamide fulfills all specifications according to DIN 74324, ISO 7628, NFR 12632, and SAEJ844.

In some cases, the bio-based polyamide exhibits a tensile modulus in a range of 400 to 700 MPa, 500 to 600 MPa, or 550 to 650 MPa under ISO 527-1/-2.

In some cases, the bio-based polyamide exhibits a Charpy notched impact strength in a range of 40-90 kJ/m2, 50-80 kJ/m2, or 60-70 kJ/m2 at 23 deg C under ISO 179/1eA.

In some cases, the thermoplastic polymer is a bio-based polyamide 11. Bio-based polyamide 11 can be produced from renewable sources such as castor oil. Castor beans contain castor oil and about 90 percent of this oil is comprised of ricinoleic acid. The ricinoleic acid can be mixed with methanol, hydrogen bromide and ammonia to form 11-aminoundecanoic acid, which can be polymerized into polyamide 11.

Bio-based polyamides are commercially available, for example, RILSAN^{®} polyamide 11 resin is available from Arkema. In some cases, the bio-based polyamide can include a UV stabilizer. In some cases, the bio-based polyamide can include a heat stabilizer. In some cases, the bio-based polyamide can include a plasticizer. In some cases, the bio-based polyamide does not include a plasticizer.

The conductive polymer composite material can be prepared from a composition comprising from 90.0 to 99.8 wt%, 93 to 99.6 wt%; or 95 to 99.5 wt% of the bio-based thermoplastic polymer based on the weight of the composite material.

### Carbon nanotubes

The conductive polymer composite is prepared from a composition comprising carbon nanotubes as a conductive filler. The carbon nanotubes may comprise single-walled carbon nanotubes (SWCNTs), multi-walled carbon nanotubes (MWCNTs), and carbon nanostructures. In some cases, the carbon nanotubes have a high aspect ratio. In some cases, the carbon nanotubes include branched carbon nanotubes. In some cases, the carbon nanotubes include cross linked carbon nanotubes. In some cases, the carbon nanotubes include cross linked and branched carbon nanotubes. In some cases, the carbon nanotubes comprise SWCNTs. In some cases, the carbon nanotubes comprise cross linked and branched carbon nanostructures. In some cases, the carbon nanotubes comprise MWCNTs. In some cases, the carbon nanotubes have an aspect ratio of> 500, >1,000, >1,500, >2,000 or >5,000. In some cases, the carbon nanotubes have a high aspect ratio of >10,000. In some cases, the carbon nanotubes have a higher aspect ratio of >100,000. In some cases, the carbon nanotubes have an ultrahigh aspect ratio of >1,000,000. In some cases, the aspect ratio value is in a range having a median value as defined above. In some cases, the carbon nanotubes have a bulk density in a range of 0.04 to 0.4 g/cm3, 0.07 to 0.35 g/cm3, 0.1 to 0.25 g/cm3, or about 0.13-0.23 g/cm3 under ASTM D7481. In some cases, the carbon nanotubes have a surface area on a range of 200-500 m2/g; 250-350 m2/g, or about 290 m2/g under ASTM D6556.

The aspect ratio (L/D) of an object is defined as the ratio of its longest dimension to shortest dimension. For rodlike particles, such as carbon nanotubes, the aspect ratio is the ratio of the length to the diameter (L/D). High aspect ratio fillers percolate at lower loadings due to more efficient network formation with fewer contacts required to form a spanning cluster. The aspect ratio of the filler has a strong effect on the electrical percolation properties of the polymer composites.

The electrical percolation threshold is the critical reinforcement concentration where the composite turns abruptly from insulator to conductor as conductive pathways are formed. In some cases, the carbon nanotubes can exhibit a percolation threshold in a range of 0.25% and 3.0 % by weight, 0.25% and 2.5% by weight, 0.25% and 2% by weight, or 0.25% and 1% by weight in the conductive polymer composite.

The conductive polymer composite material can be prepared from a composition comprising from 0.1-5.0 wt%, 0.2-4.0 wt%, 0.25-3.0 wt%, 0.5-2.5%, 0.75 wt%-2.0 wt%, or 1.0-2.0 wt% of the carbon nanotubes based on the weight of the composite material.

### Additional Conductive Fillers

Additional conductive fillers may be employed. In addition to the carbon nanotubes, additional conductive fillers may optionally be employed. In some cases, the additional conductive filler may be selected from the group consisting of graphene, carbon black, graphite, silver nanoparticles, copper nanoparticles, and combinations thereof. In some cases, the total conductive filler including the carbon nanotubes can be present in an amount from 0.1 wt% to 10 wt% based on the weight of the composite material.

### Release Agents

In some cases, the electrically conductive polymer composite comprises a release agent. In some cases, the release agent can decrease surface roughness of an extruded surface. In some cases, the release agent improves dispersion of the CNTs in the polymer composite composition. In some cases, the release agent is selected from the group consisting of a polyester wax, calcium saponified polyester wax, silicone modified polyester wax, polyolefin wax, metallic salt of a fatty acid, montan wax derivatives, polyethylene wax, oxidized PE wax, amide waxes, bisamide waxes, modified polypropylene waxes, and polyolefin wax. In some cases, the metallic salt of a fatty acid is a metallic stearate. In some cases, the metallic stearate is calcium stearate or zinc stearate. In some cases, the release agent is a PTFE-modified PE wax. In some cases, the release agent is not a PTFE-modified PE. In some cases, the release agent is selected from the group consisting of a polyester wax, calcium saponified polyester wax, silicone modified polyester wax, and polyolefin wax. In some cases, the conductive polymer composite material can be prepared from a composition comprising from 0 to 1 wt%, 0.025 to 0.75 wt%, 0.05 to 0.5 wt%, or 0.1 to 0.3 wt% of the release agent based on the weight of the composite material.

### Dispersing and Processing Additives

The conductive polymer composite is prepared from a composition comprising a dispersing and processing additive.

The electrically conductive polymer composite comprises one or more dispersing and processing additives ("processing additives"). In some cases, the dispersing and processing additives is selected from the group consisting of polyhedral oligomeric silsesquioxanes (POSS), silanes, silanol-POSS, montmorillonite (MMT) clays, and hydrophilic fumed silica. In some cases, the dispersing and processing additives is selected from the group consisting of polyhedral oligomeric silsesquioxanes (POSS), silanes, silanol-POSS, and montmorillonite (MMT) clays. In some cases, the dispersing and processing additives is selected from the group consisting of polyhedral oligomeric silsesquioxanes (POSS), silanes, and silanol-POSS. The dispersing additive may be used to improve the dispersion of the additives throughout the polymer matrix. The dispersing additive can also help prevent the CNT structures from agglomerating, e.g., through process of intercalating. In some cases, the dispersing and processing additive is selected from the group consisting of trisilanol phenyl POSS, trisilanol isobutyl POSS, and octaisobutyl POSS. The POSS compounds may be purchased commercially, for example, from Hybrid Plastics. In a specific composition, the dispersing and processing additive is a POSS compound. The POSS may be TriSilanol Phenyl POSS. The POSS may be a TriSilanol Isobutyl POSS. The POSS may be a OctaIsobutyl POSS. The silane can be an organosilicone compound such as trichlorosilane (SiHCl₃), tetramethylsilane (Si(CH₃)₄), tetraethoxysilane (Si(OCH₂CH₅)₄). Dispersing and processing additives are commercially available. For example, trisilanol phenyl POSS (SO1458) is available from Hybrid Plastics^{®}. For example, trisilanol isobutyl POSS (SO1450) is available from Hybrid Plastics^{®}. The conductive polymer composite material can be prepared from a composition comprising from 0.1 to 5.0 wt%, 0.2 to 3.0 wt%; or 0.25-2.0 wt% of the dispersing and processing additive based on the weight of the composite material.

In some cases, the conductive polymer composite is prepared from a composition that can comprise an additional additive. The additional additive can be selected from the group consisting of a UV stabilizer, light stabilizer, antioxidants, plasticizer, heat stabilizer, pigment, flame retardant, impact modifier, mechanical filler, lubricant, chain extender, and chain cutter. Various additional additives are commercially available, for example, from Bruggemann Chemical U.S., Inc., Newtown Square, PA, BASF, or Syensqo. In some cases, antioxidants can be selected from the group consisting of copper-salt compounds, phenolics, and phosphite-based antioxidants. In some cases, the impact modifier is an anhydride-modified polyolefin elastomer, a polyolefin-grafted-maleic anhydride elastomer. In some cases, the impact modifier includes a polyolefin-based ionomer. In some cases, the additional additive includes a modified fumed silica such as a hydrophobic fumed silica or amine-functionalized fumed silica. In some cases, the conductive polymer composite is prepared from a composition that may comprise one or more additional additives in a range of 0-10 wt%, 0-5 wt%, 0.05-4 wt%, 0.1-3 wt%, or 0.5-2 wt% one or more combined additional additives.

In some cases, the conductive polymer composite is prepared from a composition that does not include a dielectric filler, such as alumina nanoparticles, alumina nanotubes, aluminum oxide nanoparticles, silica nanoparticles, boron nitride nanoparticles, boron nanotubes, fumed silica, fumed alumina, and mixtures of one or more of these. In some cases, the conductive polymer composite is prepared from a composition that includes a dielectric filler.

### Properties

In the present disclosure, the tensile strength, tensile modulus, and tensile elongation can be measured using ASTM D638-22 standard or ISO 527-1/-2, for example, using Instron 3369 Universal Testing Machine. In some cases, the tensile strength, tensile modulus, and tensile elongation can be measured using ASTM D638-22 standard. Toughness can be measured as the area under the stress-strain curve. Impact strength can be determined by ASTM D 256-23, Izod notched and unnotched impact can be measured using Ceast 9000 Impact Tester (Instron). Tensile elongation can be measure by ASTM D638-22. Flexural strength and flexural modulus can be measured by ASTM D790-17. Tensile properties may be measured on an Instron UTM and impact strength on a TMI Impact Tester according to ASTM standards D638-22 and D256-23, respectively. Tensile strength is the amount of force that can be applied to a plastic before it yields (stretches irreparably) or breaks. Tensile elongation is the percentage increase in length after break divided by the original length. Greater elongation indicates greater ductility. Surface resistivity, volume resistivity may be measured under ASTM D257, IEC 62631-3-1, electrical conductivity can be measured according to ASTM D257 and D4496. In some cases, ASTM D257-14(2021)e1 test version is employed. The electrical conductivity of conductive composite inner tubes, hoses, hose assemblies can be tested according to SAE Aerospace Standard AS2078. In some cases, the hose assembly conforms to SAE International AS1946F standards. In some cases, the hose assembly conforms to SAE International AS1946F standards between -67 deg F and 275 deg F for Class II assemblies.

In some cases, the electrical current of the conductive polymer composite inner tube is equal to or greater than 10 µA for sizes -03 to -08, and equal to or greater than 20 µA for sizes -10 and over when tested under SAE AS2078.

In some cases, the conductive polymer composite exhibits a tensile strength of >40 MPa, >45 MPa, or >50 MPa.

In some cases, the conductive polymer composite exhibits a tensile modulus of>275 MPa, >300 MPa, >350 MPa, >400 MPa, >450 MPa, or > 500 MPa.

In some cases, the conductive polymer composite exhibits a tensile elongation of >150%, >200%, >250%, >300%, or >350%.

In some cases, the conductive polymer composite exhibits a flexural strength of> 20 MPa, >25 MPa, or >30 MPa.

In some cases, the conductive polymer composite exhibits a flexural modulus of >550 MPa, >600 MPa, > 700 MPa, >800 MPa, >900 MPa, or >1,000 MPa.

In some cases, the conductive polymer composite exhibits a surface resistivity at 100V of no more than 5 x 10^11 Ohms, no more than 5 x 10^10 Ohms, no more than 5 x 10^9 Ohms, no more than 5 x 10^8 Ohms, or no more than 1 x 10^8 Ohms.

In some cases, the conductive polymer composite exhibits a volume resistivity at 100V of no more than 5 x 10^11 Ohms.mm, no more than 5 x 10^10 Ohms.mm, no more than 5 x 10^9 Ohms.mm, no more than 5 x 10^8 Ohms.mm, or no more than 1 x 10^8 Ohms.mm.

### Method of making bio-based conductive polymer composite

A method of making a bio-based conductive polymer composite is provided. A method of making a bio-based conductive polymer composite is provided comprising mixing and melt extrusion of a composition comprising a bio-based thermoplastic polyamide, carbon nanotubes, and a dispersing and processing additive, optionally using a using a twin screw extruder, and forming pellets of the conductive polymer composite material. Optionally, the bio-based polyamide can be dried before the mixing. An exemplary process is shown in FIG. 1

### Aerospace hose construction

An anti-static aerospace hose is provided having a multiplicity of layers from an inner to an out radial direction comprising : i) an anti-static inner tube layer prepared from a composition comprising a bio-based polyamide, carbon nanotubes, and a dispersing and processing additive; ii) an outer tube layer prepare from a composition comprising a bio-based polyamide, and optionally a dispersing and processing additive; and optionally iii) one or more reinforcing layers. In some cases, the one or more reinforcing layers can be selected from the group consisting of a metallic and a non metallic braid. The metallic reinforcing layers may include a metallic wire braid, for example, stainless steel. For example, a wire braiding process with predefined tension can be employed. In some cases, the non metallic reinforcement can be a textile braid, a polyester braid, or polypropylene braid. In some cases, the hose construction can include a cover layer. In some cases, the cover layer can comprise a synthetic rubber, such as, for example, a chloroprene rubber, or a acrylonitrile butadiene rubber, or a polyamide, or a thermoplastic polyester elastomer. In some cases, the cover layer is an outer cover layer. In some cases, the cover layer is an antistatic cover layer.

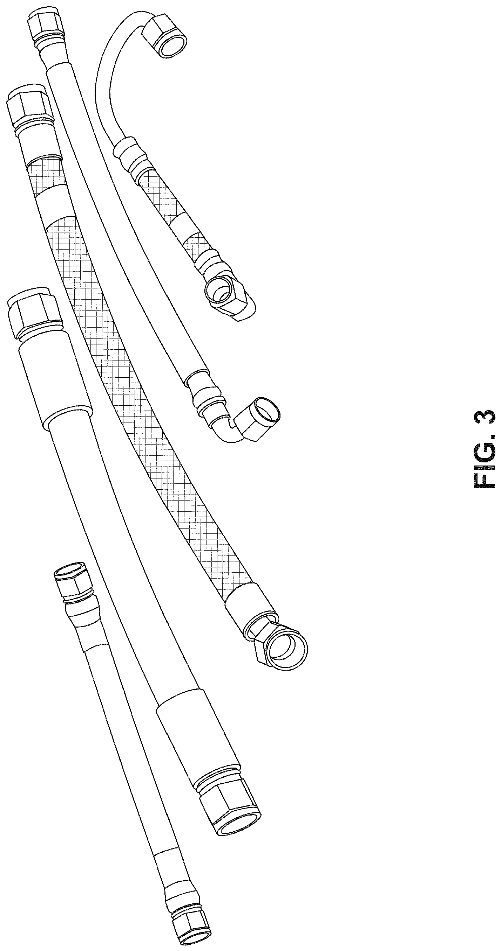

Non-limiting exemplary hose constructions are shown in FIG. 3. In some cases, the hose size is any appropriate size. In some cases, the hose size is selected from the group consisting of -2, -3, -4, -5, -6, -8, -10, -12, -14, -16, -20, -24, -32, -36, - 40, -48, -56, -64, and -72; (1/8", 3/16", ¼", 5/16", 3/8", ½", 5/8", ¾", 7/8", 1", 1-1/4", 1-1/2", 2", 2-1/4", 2-1/2", 3", 3-1/2", 4", 4-1/2")(3.2 mm, 4.8 mm, 6.4 mm, 7.9 mm, 9.5 mm, 12.7 mm, 15.9 mm, 19.0 mm, 22.2 mm, 25.4 mm, 31.8 mm, 50.8 mm, 57.6 mm, 63.5 mm, 76.2 mm, 88.9 mm, 101.6 mm, 115.2 mm).

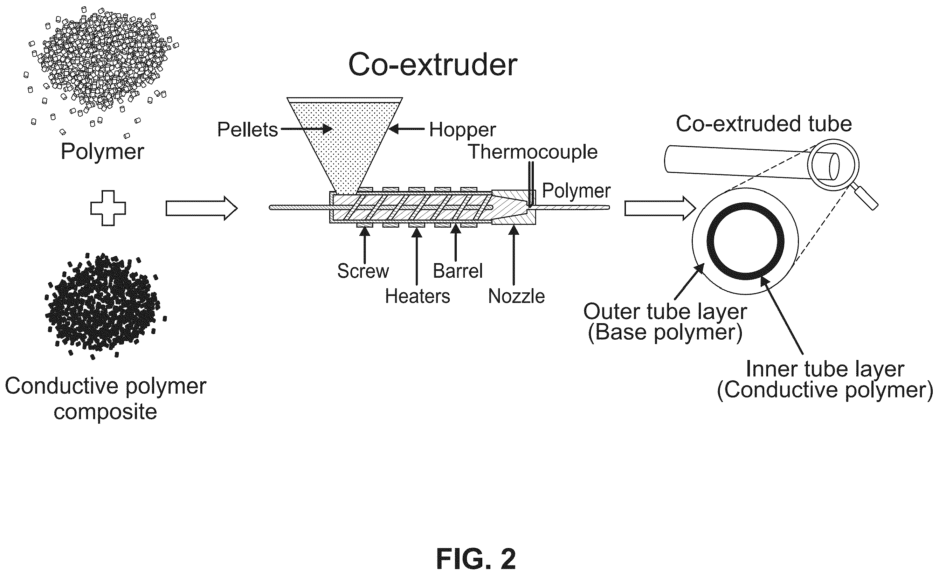

A method of making a multi-layered antistatic hose is provided comprising co-extruding a tube comprising an inner tube layer and an outer tube layer, wherein the inventive electrically conducting polymer composite is an inner layer, and a similar base polymer will be used for an outer core layer; and optionally braiding a reinforcing layer comprising a metallic braid over the outer tube layer. An exemplary process is shown in FIG. 2.

The inner tube layer is prepared from a conductive polymer composite prepared from a composition comprising a bio-based thermoplastic polymer, carbon nanotubes, a dispersing and processing additive, and optionally a release agent as provided herein.

The outer tube layer is prepared from a composition comprising a bio-based thermoplastic polymer, a dispersing and processing additive, optionally a release agent, and optional additional additives, without carbon nanotubes or other conductive components.

A method of making a multi-layered antistatic hose is provided comprising forming a reinforcing braid around a core to create a braided structure, and melt co-extruding in a tube configuration around the braided structure, the tube configuration comprising an inner tube layer and an outer tube layer, wherein the inner tube layer comprises a thermoplastic polymer composite material prepared from the first composition comprising the first bio-based polyamide, the carbon nanotubes, the dispersing and processing additive, and optionally a release agent, and wherein the outer tube layer is prepared from the second composition comprising the second bio-based polyamide and optionally a dispersing and processing additive.

Unlike PTFE paste extrusion method, melt co-extrusion can be used to achieve a double layered tube. FIG. 2 shows an exemplary melt co-extrusion process to fabricate bi-layer tubes for aerospace application. The co-extrusion parameters achieve optimum compatibility between inner conductive layer and outer base polymer layer. The melt extrusion insures minimum material wastage during the processing. Moreover, the melt extrusion can provide a better control on the tube dimensions. Compared to paste extrusion used for PTFE, melt extrusion is a sustainable process where no added chemical need be used. Moreover, melt extrusion has significantly lower production time and utilizes minimum energy.

### EXAMPLES

### Example 1. Electrically Conductive Polymer Composites

A series of conductive thermoplastic composites was prepared as outlined in FIG. 1. A bio-based thermoplastic polyamide, carbon nanotubes, and dispersing and processing additive were mixed and heated using a twin screw extruder to form the conductive polymer composite. A polyamide 11 bio-based thermoplastic polyamide was selected for development (RILSAN^{®} BESN P210, Arkema). High aspect ratio crosslinked branched carbon nanotubes were employed (ATHLOS^{™} 200 carbon nanostructures, Cabot). A trisilanolisobutyl POSS (TriSilanolIsobutyl POSS^{®}, Hybrid Plastics^{®}) was employed as dispersing and processing additive. Formulations according to Table 2 were prepared.

**Table 2. Formulations for conductive thermoplastic polymer composites**

| Formulation Number | Total Weight (grams) | CNTs (wt%) | POSS (wt%) | Polymer (wt%) |
|---|---|---|---|---|
| R-C025 | 5000 | 0.25 | 0.25 | 99.50 |
| R-C050 | 5000 | 0.50 | 0.25 | 99.25 |
| R-C075 | 5000 | 0.75 | 0.25 | 99.00 |
| R-C100 | 5000 | 1.00 | 0.25 | 98.75 |
| R-C125 | 5000 | 1.25 | 0.25 | 98.50 |
| R-C150 | 5000 | 1.50 | 0.25 | 98.25 |
| R-C175 | 5000 | 1.75 | 0.25 | 98.00 |
| R-C200 | 5000 | 2.00 | 0.25 | 97.75 |
| R-C250 | 5000 | 2.50 | 0.25 | 97.25 |

The conductive polymer composites were tested for electrical and mechanical properties and exhibit the properties shown in Table 3 and Table 4.

**Table 3. Surface and Volume Resistivity of Conductive Polymer Composites**

| Formulation | Surface Resistivity (Ohms @ 100V) | Volume Resistivity (Ohms.mm @ 100V) |
|---|---|---|
| Base polymer | 6.98E+11 | 3.86E+11 |
| R-C025 | 1.33E+12 | 3.58E+11 |
| R-C05 | 6.55E+11 | 4.02E+11 |
| R-C075 | 9.68E+10 | 6.77E+10 |
| R-C100 | 5.01E+10 | 4.50E+10 |
| R-C125 | 5.09E+09 | 3.04E+09 |
| R-C150 | 1.28E+10 | 1.45E+10 |
| R-C175 | 1.05E+09 | 1.24E+09 |
| R-C200 | 2.15E+08 | 2.14E+08 |

**Table 4. Tensile Properties of Conductive Polymer Composites**

| Formulation | Tensile Strength | Tensile Modulus | Tensile Elongation |
|---|---|---|---|
| | (MPa) | (MPa) | (%) |
| Base polymer | 44.60 | 569.00 | 300.55 |
| R-C025 | 42.62 | 291.80 | 339.20 |
| R-C05 | 47.48 | 313.60 | 385.00 |
| R-C075 | 48.72 | 341.60 | 361.40 |
| R-C100 | 53.22 | 355.00 | 417.20 |
| R-C125 | 55.57 | 358.80 | 462.80 |
| R-C150 | 56.22 | 444.60 | 353.60 |
| R-C175 | 53.61 | 495.60 | 272.80 |
| R-C200 | 55.58 | 566.20 | 271.80 |

**Table 5. Flexural Properties of Conductive Polymer Composites**

| Formulation | Flexural Strength (MPa) | Flexural Modulus (MPa) | Flexural Elongation (mm) |
|---|---|---|---|
| Base polymer | 23.02 | 559.54 | 14.74 |
| R-C025 | 25.18 | 621.22 | 14.68 |
| R-C050 | 26.26 | 656.58 | 14.94 |
| R-C075 | 26.82 | 670.16 | 14.56 |
| R-C100 | 27.86 | 703.78 | 14.70 |
| R-C125 | 28.50 | 723.56 | 14.68 |
| R-C150 | 30.27 | 960.41 | 14.58 |
| R-C175 | 32.69 | 1104.12 | 14.59 |
| R-C200 | 34.92 | 1222.90 | 14.65 |

**Table 6. Impact Strength (Notched) of Conductive Polymer Composites**

| Formulation | Impact (notched) Absolute energy (%) | Impact (notched) Re (kJ/m2) | Impact (Notched) Energy (J) |
|---|---|---|---|
| Base polymer | 48.06 | 65.22 | 2.64 |
| R-C025 | 57.02 | 79.57 | 3.14 |
| R-C050 | 58.96 | 82.73 | 3.24 |
| R-C075 | 60.20 | 84.20 | 3.31 |
| R-C100 | 55.84 | 78.11 | 3.07 |
| R-C125 | 43.90 | 61.40 | 2.42 |

**Table 7. Impact Strength (UnNotched) of Conductive Polymer Composites**

| Formulation | Impact (UnNotched) Absolute energy (%) | Impact (UnNotched) Re (kJ/m2) | Impact (UnNotched) Energy (J) |
|---|---|---|---|
| Base polymer | 76.00 | 106.29 | 4.18 |
| R-C025 | 88.40 | 123.35 | 4.86 |
| R-C050 | 80.53 | 112.99 | 4.43 |
| R-C075 | 67.61 | 94.57 | 3.72 |
| R-C100 | 81.11 | 113.44 | 4.46 |
| R-C125 | 70.69 | 98.86 | 3.89 |

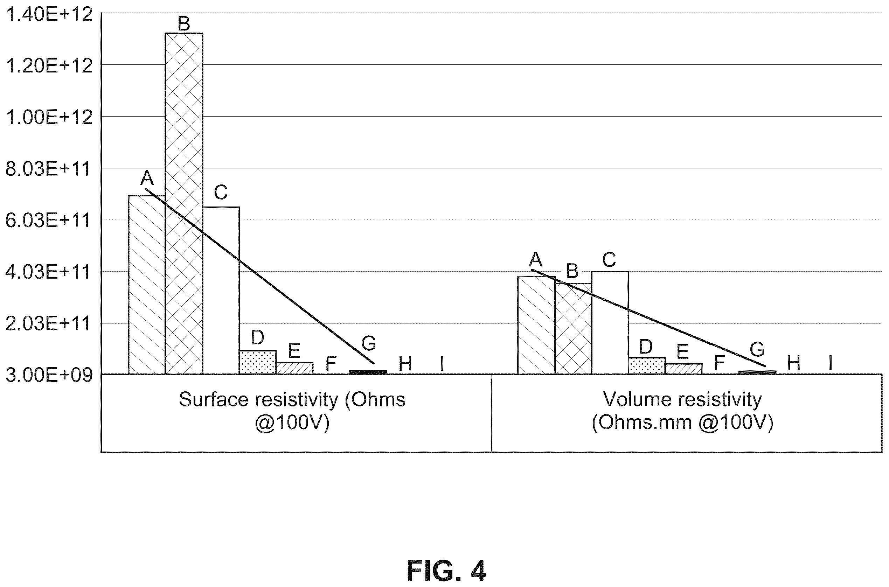

Two graphs with electrical properties are shown in FIG. 4; Surface resistivity (Ohms@ 100V; left panel) and Volume resistivity (Ohms.mm @100V; right panel) for comparative base polymer (A) and inventive conductive polymer composites having 0.25 wt% CNTs (B), 0.5 wt% CNTs (C), 0.75 wt% CNTs (D), 1.0 wt% CNTs (E), 1.25 wt% CNTs (F), 1.50 wt% (G), 1.75 wt% CNTs (H), and 2.0 wt % CNTs (I). The Surface and Volume resistivity decrease with compounding with increased CNT concentrations hence electrical conductivity increases. 10^8 ohm surface resistivity is observed at 2 wt% of CNT compounding.

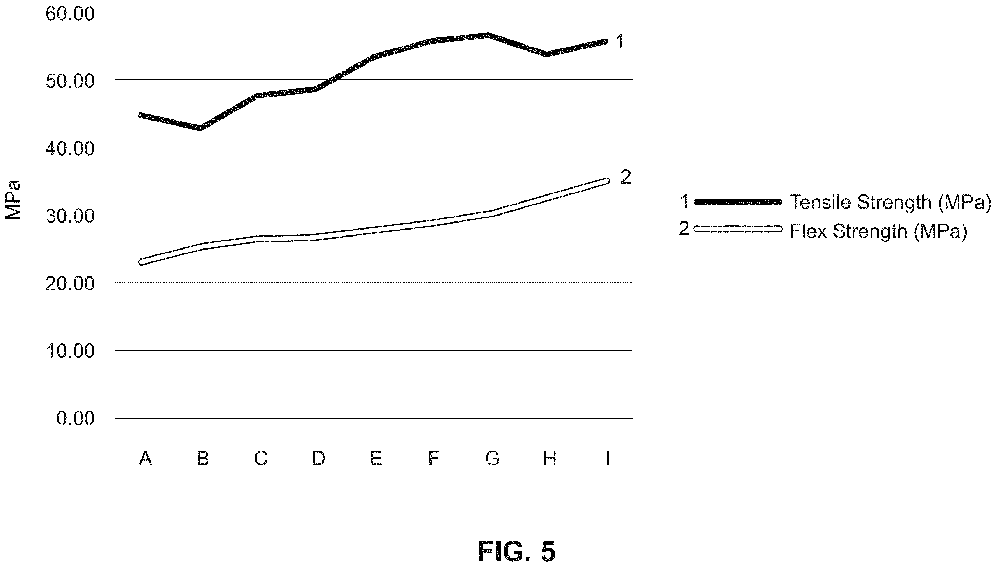

A graph of mechanical properties is shown in FIG. 5 illustrating Tensile strength (MPa; "1") and Flexural strength (MPa; "2") for comparative base polymer (A) and inventive conductive polymer composites having 0.25 wt% CNTs (B), 0.5 wt% CNTs (C), 0.75 wt% CNTs (D), 1.0 wt% CNTs (E), 1.25 wt% CNTs (F), 1.50 wt% (G), 1.75 wt% CNTs (H), and 2.0 wt % CNTs (I). There is about a 10% change in mechanical properties with 2% CNT compared to base polymer.

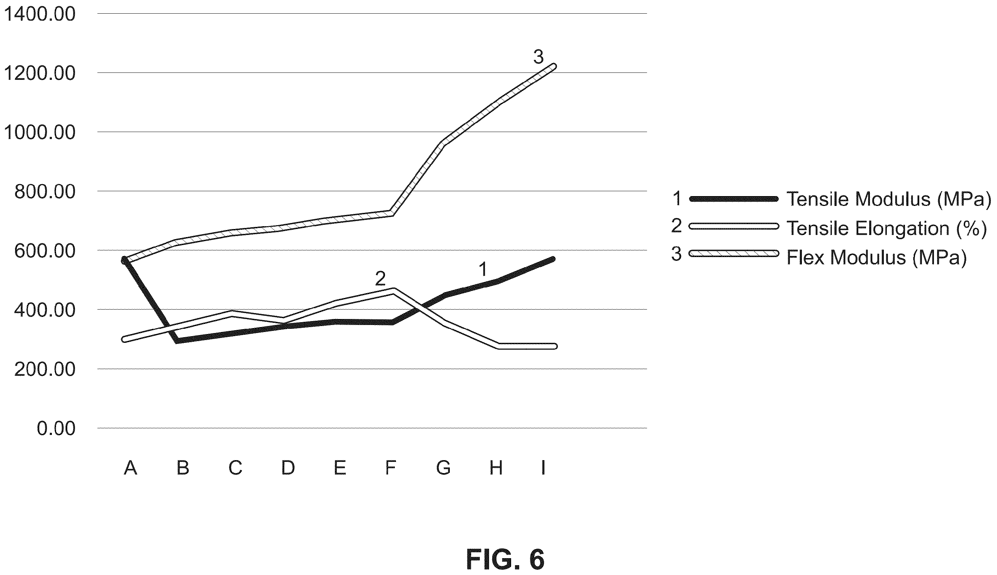

A graph of mechanical properties is shown in FIG. 6 illustrating Tensile modulus (MPa; "1"), Tensile elongation (%, "2") and Flexural modulus (MPa, "3") for comparative base polymer (A) and inventive conductive polymer composites having 0.25 wt% CNTs (B), 0.5 wt% CNTs (C), 0.75 wt% CNTs (D), 1.0 wt% CNTs (E), 1.25 wt% CNTs (F), 1.50 wt% (G), 1.75 wt% CNTs (H), and 2.0 wt % CNTs (I).

### Example 2. Further Electrically Conductive Polymer Composites

As part of design of experiments (DOE), another series of conductive thermoplastic composites was prepared as outlined in FIG. 1. The tubing was developed to conform to AS1946F standards. A bio-based thermoplastic polyamide, carbon nanotubes, and dispersing and processing additive were mixed and heated using a twin screw extruder to form the conductive polymer composite. A polyamide 11 bio-based thermoplastic polyamide was selected for development (RILSAN^{®} BESN P210, Arkema). High aspect ratio crosslinked branched carbon nanotubes were employed (ATHLOS^{™} 200 carbon nanostructures, Cabot). A trisilanolisobutyl POSS (TriSilanolIsobutyl POSS^{®}, Hybrid Plastics^{®}) was employed as dispersing and processing additive. DOE formulations according to Table 8 were prepared.

**Table 8. DOE formulations for conductive thermoplastic polymer composites**

| Formulation Number | Base Polymer | Polymer (wt%) | CNT (wt%) | POSS (wt% |
|---|---|---|---|---|
| PA11-C10 | PA11 | 98.75 | 1 | 0.25 |
| PA11-C15 | PA11 | 98.25 | 1.5 | 0.25 |
| PA11-C20 | PA11 | 97.75 | 2.0 | 0.25 |
| PA11-C25 | PA11 | 97.25 | 2.5 | 0.25 |

Four (4) different DOE composition conductive materials were used for production of inner layer of co-extruded tubing produced according to FIG. 2. The tubing was produced in 100-meter coils. Ten samples were taken from each coil. Five samples were taken from one end (A) and five samples were taken from the other end (B) of each coil.

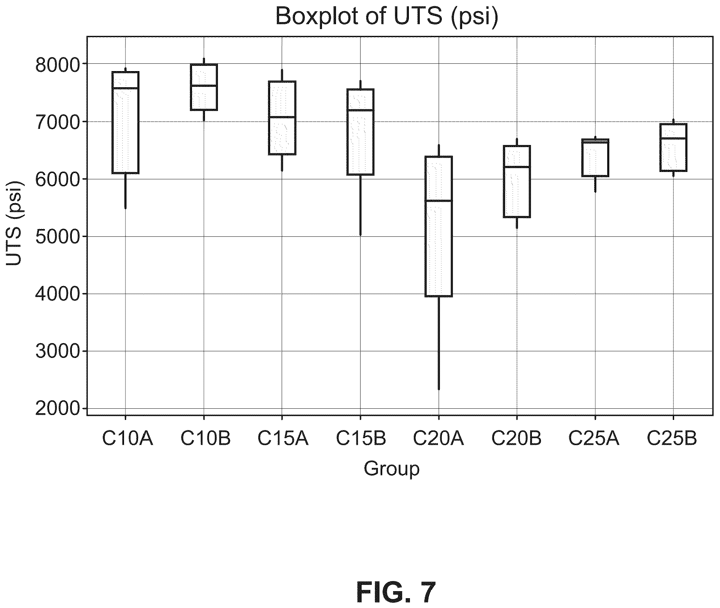

FIG. 7 shows a box plot of ultimate tensile strength (UTS, psi) from both ends (n=5) of each of four tubing coils prepared from the polymer composites of Table 8. The composite tubing comprising 1% CNTs (C10A, C10B), 1.5% CNTs (C15A, C15B), and 2.5% CNTs (C25A, C25B) each exhibited UTS of greater than about 6000 psi. The composite tubing comprising 1% CNTs (C10A, C10B) and 1.5% CNTs (C15A, C15B) exhibited a mean UTS of greater than about 7000 psi.

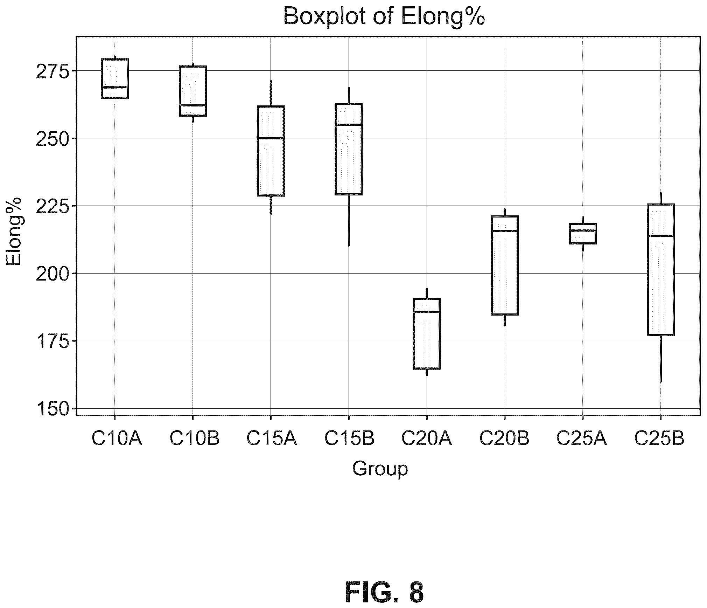

FIG. 8 shows a boxplot of tensile elongation % from both ends (n=5) of each of four tubing coils prepared from the polymer composites of Table 8. The composite tubing comprising 1% CNTs (C10A, C10B) and 1.5% CNTs (C15A, C15B) exhibited greater than about 200% elongation or greater than 225% tensile elongation. The composite tubing comprising 1% CNTs (C10A, C10B) exhibited greater than about 250% tensile elongation. The composite tubing comprising 2.0 wt% CNTs (C20A, C20B) and 2.5 wt% CNTs (C25A, C25B) exhibited greater than about 150 wt% tensile elongation. DOE conductive layer study was performed on tube level. Electrical conductivity was tested in accordance with AS2078.

Appearance of four different DOE composite tubing samples comprising from 1.0 wt% to 2.5 wt% CNTs and mean electrical conductivity results were assessed. The electrical conductivity of the 1.0 wt% CNT composite was >0.9 microA @1000 VDC. The electrical conductivity the 1.5 wt % CNT composite was >50 mA @ 75 VDC. The electrical conductivity of the 2.0 wt% CNT composite was >50 mA @ 40 VDC. The electrical conductivity of the 2.5 wt% CNT composite was > 50 mA @ 57 VDC.

In each of the CNT 1 wt% (C10), CNT 1.5 wt% (C15), CNT 2.0 wt% (C20), and CNT 2.5 wt% (C25) composites according to Table 8, the outer surface exhibited a smooth and shiny appearance. However, the inner layers exhibited courser appearances. The inner layer of the CNT 1.5 wt% composite tubing exhibited a coarser appearance than the CNT 1.0 wt% composite tubing. The inner layer of the CNT 2.0 wt% composite tubing exhibited a coarser appearance than the CNT 1.5 wt% composite tubing. The inner layer of the CNT 2.5 wt% composite tubing exhibited a coarser appearance than the CNT 2.0 wt% composite tubing. In order to improve inner surface roughness as well as dispersion of the CNTs in the composite material, the 1 wt% CNT composite material was selected for further DOE study on use of release agents at 0.1-0.3 wt%.

### Clauses

Clause 1. An electrically conductive thermoplastic polymer composite material prepared from a first composition comprising a first bio-based polyamide, carbon nanotubes, and a dispersing and processing additive.

Clause 2. The conductive polymer composite material according to clause 1, wherein the bio-based polyamide is selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide.

Clause 3. The conductive polymer composite material according to clause 1 or 2, wherein the first bio-based polyamide exhibits >50%, >60%, >70%, or >80% bio-based carbon content when tested under ASTM D6866.

Clause 4. The conductive polymer composite material according to any one of clauses 1-3, wherein the carbon nanotubes are selected from the group consisting of single walled carbon nanotubes, multiwalled carbon nanotubes, branched carbon nanotubes, and crosslinked and branched carbon nanotubes.

Clause 5. The conductive polymer composite material according to according to any one of clauses 1-4, wherein the carbon nanotubes have a high aspect ratio of >10,000.

Clause 6. The conductive polymer composite material according to according to any one of clauses 1-5, wherein the dispersing and processing additive is a selected from the group consisting of polyhedral oligomeric silsesquioxanes (POSS), silanes, and silanol-POSS.

Clause 7. The conductive polymer composite material according to according to any one of clauses 1-6, wherein the dispersing and processing additive is selected from the group consisting of trisilanol phenyl POSS, trisilanol isobutyl POSS, and octaisobutyl POSS.

Clause 8. The conductive thermoplastic polymer composite material according to any one of clauses 1-7, wherein the composition further comprises a release agent.

Clause 9. The conductive thermoplastic polymer composite material according to clause 8, wherein the release agent is selected from the group consisting of a polyester wax, calcium saponified polyester wax, silicone modified polyester wax, polyolefin wax, metallic salt of a fatty acid, montan wax derivitives, polyethylene wax, oxidized PE wax, amide waxes, bisamide waxes, modified polypropylene waxes, and polyolefin wax, optionally wherein the metallic salt of fatty acid is a metallic stearate, further optionally wherein the metallic stearate is selected from the group consisting of calcium stearate, and zinc stearate.

Clause 10. The conductive polymer composite material according to according to any one of clauses 1-8, wherein the composition comprises 90-99.8 wt% of the first bio-based polyamide; 0.1-5.0 wt% of the carbon nanotubes; and 0.1-5.0 wt% of the dispersing and processing additive.

Clause 11. The conductive polymer composite material according to according to any one of clauses 1-10, wherein the composition comprises 90-99.8 wt% of the first bio-based polyamide; 0.1-5.0 wt% of the carbon nanotubes; 0.1-5.0 wt% of the dispersing and processing additive; and 0-1.0 wt% of the release agent.

Clause 12. The conductive polymer composite material according to according to any one of clauses 1-11, wherein the composition comprises 93-99.6 wt% of the first bio-based polyamide; 0.2-4.0 wt% of the carbon nanotubes; and 0.2-3.0 wt% of the dispersing and processing additive.Clause 13. The conductive polymer composite material according to according to any one of clauses 1-11, wherein the composition comprises 93-99.6 wt% of the first bio-based polyamide; 0.2-4.0 wt% of the carbon nanotubes; 0.2-3.0 wt% of the dispersing and processing additive; and 0.1 to 0.3 wt% of the release agent.

Clause 14. The conductive polymer composite material according to any one of clauses 1-13, wherein the composite material exhibits one or more properties selected from the group consisting of: a tensile strength of >40 MPa, >45 MPa, or >50 MPa when tested under ASTM D638-22; a tensile modulus of>275 MPa, >300 MPa, >350 MPa, >400 MPa, >450 MPa, or > 500 MPa; a tensile elongation of >250%, >300%, or >350%; a flexural strength of> 20 MPa, >25 MPa, or >30 MPa under ASTM D790; a flexural modulus of>550 MPa, >600 MPa, > 700 MPa, >800 MPa, >900 MPa, or >1,000 MPa; a surface resistivity at 100V of no more than 5 x 10^11 Ohms, no more than 5 x 10^10 Ohms, no more than 5 x 10^9 Ohms, no more than 5 x 10^8 Ohms, or no more than 1 x 10^8 Ohms under ASTM D257; and a volume resistivity at 100V of no more than 5 x 10^11 Ohms.mm, no more than 5 x 10^10 Ohms.mm, no more than 5 x 10^9 Ohms.mm, no more than 5 x 10^8 Ohms.mm, or no more than 1 x 10^8 Ohms.mm under ASTM D257.

Clause 15. A method of making the bio-based polymer composite material according to any one of clauses 1-14, the method comprising mixing the first bio-based polyamide, the carbon nanotubes, the dispersing and processing additive, and optionally a release agent to form a composition; and melt extruding the composition to form pellets of the bio-based polymer composite material.

Clause 16. The method according to clause 15, further comprising melting the pellets of the bio-based polymer composite material; and extruding the melted composition through a die to form a shaped article.

Clause 17. The method according to clause 16, comprising forming a tube as the shaped article.

Clause 18. A method of making a multi-layered antistatic hose comprising melt co-extruding a tube comprising an inner tube layer and an outer tube layer, wherein the inner tube layer comprises the bio-based polymer composite material according to according to any one of clauses 1-14, and wherein the outer tube layer is prepared from a second composition comprising a second bio-based polyamide and optionally a dispersing and processing additive; and optionally braiding a reinforcing layer comprising a metallic braid over the inner or outer tube layer.

Clause 19. The method of claim 18, wherein the first bio-based polyamide is selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide.

Clause 20. The method of claim 18 or 19, wherein the second bio-based polyamide is selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide.

Clause 21. The method according to any one of clauses 18 to 20, wherein first and second bio-based polyamides are the same.

Clause 22. The method according to any one of clauses 18 to 21, wherein the outer tube layer does not include carbon nanotubes.

Clause 23. A multi-layered antistatic hose comprising: i) an inner tube layer comprising the conductive thermoplastic polymer composite material according to any one of clauses 1-14; ii) an outer tube layer prepared from a second composition comprising a second bio-based polyamide, and optionally a dispersing and processing additive; and optionally iii) one or more reinforcing layers, optionally wherein the one or more reinforcing layers comprise a metallic or non-metallic braid.

Clause 24. The multi-layered antistatic hose according to clause 23, wherein the electrical current of the conductive polymer composite inner tube is equal to or greater than 10 µA for hose sizes -03 to -08, and equal to or greater than 20 µA for hose sizes -10 and over when tested under SAE AS2078.

Clause 25. A hose comprising at least one layer comprising a conductive thermoplastic polymer composite material prepared from a first composition comprising a first bio-based polyamide, carbon nanotubes, and a dispersing and processing additive.

Clause 26. The hose according to claim 22, further comprising a release agent.

Clause 27. The hose according to clause 25 or 26, wherein the first bio-based polyamide is selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide.

Clause 28. The hose according to any one of clauses 25 to 27, wherein the first bio-based polyamide exhibits >50%, >60%, >70%, or >80% bio-based carbon content when tested under ASTM D6866.

Clause 29. The hose according to any one of clauses 25-28, wherein the carbon nanotubes are selected from the group consisting of single walled carbon nanotubes, multiwalled carbon nanotubes, branched carbon nanotubes, and crosslinked and branched carbon nanotubes.

Clause 30. The hose according to any one of clauses 25-29, wherein the carbon nanotubes have a high aspect ratio of >10,000.

Clause 31. The hose according to any one of clauses 25-30, wherein the dispersing and processing additive is a selected from the group consisting of polyhedral oligomeric silsesquioxanes (POSS), silanes, and silanol-POSS.

Clause 32. The hose according to any one of clauses 25-31, wherein the dispersing and processing additive is selected from the group consisting of trisilanol phenyl POSS, trisilanol isobutyl POSS, and octaisobutyl POSS.

Clause 33. The hose according to any one of clauses 26-32, wherein the release agent is selected from the group consisting of a polyester wax, calcium saponified polyester wax, silicone modified polyester wax, polyolefin wax, and a metallic stearate, optionally wherein the metallic stearate is selected from the group consisting of calcium stearate, and zinc stearate

Clause 34. The hose according to any one of clauses 25-33, wherein the composition comprises 90-99.8 wt% of the first bio-based polyamide; 0.1-5.0 wt% of the carbon nanotubes; 0.1-5.0 wt% of the dispersing and processing additive; and 0-1.0 wt% of the release agent.

Clause 35. The hose according to any one of clauses 25-34, wherein the composition comprises 93-99.6 wt% of the first bio-based polyamide; 0.2-4.0 wt% of the carbon nanotubes; 0.2-3.0 wt% of the dispersing and processing additive; and 0.05-0.5 wt% of the release agent.

Clause 36. The hose according to any one of clauses 25-35, wherein the conductive thermoplastic polymer composite material exhibits one or more properties selected from the group consisting of: a tensile strength of >40 MPa, >45 MPa, or >50 MPa when tested under ASTM D638-22; a tensile modulus of>275 MPa, >300 MPa, >350 MPa, >400 MPa, >450 MPa, or > 500 MPa; a tensile elongation of >150%, >200%, >250%, >300%, or >350%; a flexural strength of > 20 MPa, >25 MPa, or >30 MPa under ASTM D790; a flexural modulus of>550 MPa, >600 MPa, > 700 MPa, >800 MPa, >900 MPa, or >1,000 MPa; a surface resistivity at 100V of no more than 5 x 10^11 Ohms, no more than 5 x 10^10 Ohms, no more than 5 x 10^9 Ohms, no more than 5 x 10^8 Ohms, or no more than 1 x 10^8 Ohms under ASTM D257; and a volume resistivity at 100V of no more than 5 x 10^11 Ohms.mm, no more than 5 x 10^10 Ohms.mm, no more than 5 x 10^9 Ohms.mm, no more than 5 x 10^8 Ohms.mm, or no more than 1 x 10^8 Ohms.mm under ASTM D257.

Clause 37. The hose according to any one of clauses 25-36, wherein the at least one layer is an inner layer.

Clause 38. The hose according to any one of clauses 25-37 for use in carrying an aerospace fluid, optionally wherein the aerospace fluid is an aviation fuel.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A hose comprising at least one layer comprising an electrically conductive thermoplastic polymer composite material prepared from a first composition comprising a first bio-based polyamide, carbon nanotubes, and a dispersing and processing additive.

2. The hose according to claim 1, wherein the first composition further comprises a release agent, and optionally one or more additional additives.

3. The hose according to claim 1 or 2, wherein the first bio-based polyamide is selected from the group consisting of a bio-based polyamide 11, bio-based polyamide 6, bio-based polyamide 4.6, bio-based polyamide 4.10, bio-based polyamide 66, bio-based polyamide 56, bio-based polyamide 6.10, bio-based polyamide 6.12, bio-based polyamide 12, bio-based polyamide 8.10, and bio-based polyphthalamide, optionally, wherein the first bio-based polyamide exhibits >50%, >60%, >70%, or >80% bio-based carbon content when tested under ASTM D6866.

4. The hose according to any one of claims 1-3, wherein the carbon nanotubes are selected from the group consisting of single walled carbon nanotubes, multiwalled carbon nanotubes, branched carbon nanotubes, and crosslinked and branched carbon nanotubes, optionally wherein the carbon nanotubes have a high aspect ratio of >10,000.

5. The hose according to any one of claims 1-4, wherein the dispersing and processing additive is a selected from the group consisting of polyhedral oligomeric silsesquioxanes (POSS), silanes, and silanol-POSS, optionally wherein the dispersing and processing additive is selected from the group consisting of trisilanol phenyl POSS, trisilanol isobutyl POSS, and octaisobutyl POSS.

6. The hose according to any one of claims 2-5, wherein the release agent is selected from the group consisting of a polyester wax, calcium saponified polyester wax, silicone modified polyester wax, polyolefin wax, metallic salt of a fatty acid, montan wax derivitives, polyethylene wax, oxidized PE wax, amide waxes, bisamide waxes, modified polypropylene waxes, and polyolefin wax.

7. The hose according to any one of claims 1-6, wherein the composition comprises
90-99.8 wt% of the first bio-based polyamide;
0.1-5.0 wt% of the carbon nanotubes; and
0.1-5.0 wt% of the dispersing and processing additive.

8. The hose according to any one of claims claim 1-7, wherein the conductive thermoplastic polymer composite material exhibits one or more properties selected from the group consisting of:
a tensile strength of >40 MPa, >45 MPa, or >50 MPa when tested under ASTM D638-22;
a tensile modulus of>275 MPa, >300 MPa, >350 MPa, >400 MPa, >450 MPa, or > 500 MPa;
a tensile elongation of>150%, >200%, >250%, >300%, or >350%;
a flexural strength of> 20 MPa, >25 MPa, or >30 MPa under ASTM D790;
a flexural modulus of>550 MPa, >600 MPa, > 700 MPa, >800 MPa, >900 MPa, or >1,000 MPa;
a surface resistivity at 100V of no more than 5 x 10^11 Ohms, no more than 5 x 10^10 Ohms, no more than 5 x 10^9 Ohms, no more than 5 x 10^8 Ohms, or no more than 1 x 10^8 Ohms under ASTM D257; and
a volume resistivity at 100V of no more than 5 x 10^11 Ohms.mm, no more than 5 x 10^10 Ohms.mm, no more than 5 x 10^9 Ohms.mm, no more than 5 x 10^8 Ohms.mm, or no more than 1 x 10^8 Ohms.mm under ASTM D257.

9. The hose according to any one of claims 1-8, wherein the at least one layer is an innermost layer.

10. A multi-layered antistatic hose according to any one of claims 1-9, the hose comprising:
i) an inner tube layer prepared from a first composition comprising a first bio-based polyamide, carbon nanotubes, and a dispersing and processing additive;
ii) an outer tube layer prepared from a second composition comprising a second bio-based polyamide, and optionally a dispersing and processing additive; and optionally
iii) one or more reinforcing layers, optionally comprising a metallic or non-metallic braid.

11. The multi-layered antistatic hose according to claim 10, wherein the first and/or second composition further comprise a release agent, and optionally one or more additional additives.

12. The multi-layered antistatic hose according to claim 10 or 11, wherein
the first and second bio-based polyamides exhibit >50%, >60%, >70%, or >80% bio-based carbon content when tested under ASTM D6866,
optionally wherein the first and second bio-based polyamides are the same bio-based polyamide.

13. The multi-layered antistatic hose according to any one of claims 10-12, wherein the electrical current of the anti-static conductive thermoplastic polymer composite inner tube is equal to or greater than 10 µA for hose sizes -03 to -08, and equal to or greater than 20 µA for hose sizes -10 and over when tested under SAE AS2078.

14. The multi-layered antistatic hose according to any one of claims 10-13 for use in carrying an aerospace fluid.

15. A method of making the multi-layered antistatic hose of any one of claims 10-14, the method comprising
melt co-extruding a tube comprising an inner tube layer and an outer tube layer, wherein the inner tube layer comprises a thermoplastic polymer composite material prepared from the first composition comprising the first bio-based polyamide, the carbon nanotubes, the dispersing and processing additive, and optionally a release agent, and wherein the outer tube layer is prepared from the second composition comprising the second bio-based polyamide, optionally a dispersing and processing additive, and optionally a release agent; and
optionally braiding a reinforcing layer over the outer tube layer, optionally, wherein first and second bio-based polyamides are the same,
further optionally wherein the outer tube layer does not include carbon nanotubes.
